# EUROPÄISCHE PATENTSCHRIFT

(11) **EP 0 735 648 B1**
(45) Veröffentlichungstag und Bekanntmachung des Hinweises auf die Patenterteilung: **13.09.2000**
(21) Anmeldenummer: 96104672.9
(22) Anmeldetag: 25.03.1996
(51) Int. Cl.: H02K 7/10

(54) **Getriebelose Treibscheiben-Fördermaschine**
Gearless traction-type hoisting device
Appareil de levage sans engrenage

(30) Priorität: 25.03.1995 DE 19511077
(43) Veröffentlichungstag der Anmeldung: 02.10.1996
(73) Patentinhaber: Thyssen Aufzugswerke GmbH, 73765 Neuhausen a.d.F. (DE)
(72) Erfinder: Ruoff, Volkmar, 72555 Metzingen (DE); Schulz, Jürgen, 72555 Metzingen (DE)
(74) Vertreter: Hössle, Markus, Dipl.-Phys.

(56) Entgegenhaltungen:
- DE-A- 2 043 681
- DE-A- 4 233 759
- DE-B- 1 192 584
- DE-B- 1 288 773
- DE-C- 598 405
- US-A- 4 960 186
- US-A- 5 018 603

## Beschreibung

Die Erfindung betrifft eine getriebelose Treibscheiben-Fördermaschine insbesondere zum Antrieb von Aufzügen, mit einer an beiden Enden auf einer Tragkonstruktion oder am Boden drehfest abgestützten Achse, auf der ein Stator eines elektrischen Synchron- oder vorzugsweise Asynchronmotors befestigt und daneben eine Treibscheibe drehbar gelagert ist, die einen mit Seilrillen versehenen ersten Bereich und einen zweiten Bereich für den Angriff von Bremsbacken aufweist und mit dem Rotor des Elektromotors in fester Verbindung steht.

Bei einer aus US 4,739,969 bekannten Treibscheiben-Fördermaschine hat die auf einer stationären Achse gelagerte Treibscheibe einen mit Seilrillen versehenen ersten Bereich, der an einer Seite in einen zweiten Umfangsbereich größeren Durchmessers übergeht. Dem außen auf dem erweiterten Umfangsbereich befestigten Rotor eines Elektromotors liegt der an von der stationären Achse ausgehenden Tragarmen auf noch größerem Umfang gehaltene Stator gegenüber. Die Innenfläche des erweiterten Umfangsbereiches dient als Bremsfläche für auf der stationären Achse abgestützte, zum Elektromotor axial ausgerichtete Bremsbacken. Diese bekannte Bauweise beschränkt den Konstruktions- und Auslegungsspielraum insofern, als der Außen- oder Bohrungsdurchmesser des Elektromotors stets deutlich größer ist als der Durchmesser der zylindrischen Bremsfläche. Weil außerdem der Bremstrommeldurchmesser mit Rücksicht auf Sicherheitsanforderungen sowie auf die innenliegenden Bremsbacken meist größer gewählt wird als der Treibscheibendurchmesser, führt die Summe dieser Beschränkungen und Bedingungen zu einem extrem großen Gesamtdurchmesser und einem entsprechend hohen baulichen Aufwand.

Bei einer aus US 4 960 186 bekannten Treibscheiben-Fördermaschine der eingangs beschriebenen Art ist auf der drehfest abgestützten Achse ein Motorstator befestigt und daneben die Treibscheibe drehbar gelagert, die einen ersten mit Seilrillen versehenen Bereich und auf der vom Stator entfernten Seite einen zweiten zum Anlegen von Bremsbacken bestimmten Bereich aufweist. An der zum Stator weisenden Seite der Treibscheibe ist ein Motorgehäuse angeschlossen, das aus einem zylindrischen Mantel und zwei Kühlluft-Öffnungen enthaltenden seitlichen Radialplatten besteht, die bis nahe an die stationäre Achse heranreichen und von denen die eine mit der Treibscheibe axial verschraubt ist. Da das Blechpaket des Motorrotors am Innenumfang des Motorgehäusemantels mit seitlichem Abstand von den Radialplatten befestigt ist, entstehen für die Kraftübertragung zwischen Rotor und Treibscheibe ungünstige Verhältnisse, die besonders bei größeren Außenläufermotoren durch einen hohen Aufwand zur Versteifung des freitragenden Motorgehäuses ausgeglichen werden müssen. Außerdem gestaltet sich der Zusammenbau der Motorteile an sich und der Anbau an die Treibscheibe sehr umständlich. Einen weiteren wesentlichen Nachteil bildet die nur langsame Wärmeabfuhr aus dem Motor durch die axial durch die Öffnungen in den Radialplatten und die Motorspalten strömende, durch nicht gezeigte Zusatzgebläse angetriebene, Kühlluft.

Daher ist Aufgabe der Erfindung, für getriebelose Antriebsmaschinen der eingangs beschriebenen Art eine verbesserte bauliche Anordnung zu schaffen, die sich durch einen kostengünstigen Aufbau und eine einfache, wirkungsvolle Motorkühlung auszeichnet.

Diese Aufgabe wird erfindungsgemäß dadurch gelöst, daß das Blechpaket des Rotors an seinem freien Außenumfang direkten Kontakt zur Umgebungsatmosphäre hat und an der dem Bremsbereich abgewandten Seite der Treibscheibe axial freitragend befestigt ist.

Aus der Tatsache, daß bei der vorgeschlagenen Bauweise zur festen Verbindung des Rotors mit der Treibscheibe kein Motorgehäuse notwendig ist, ergeben sich erheblich verringerte Herstell- und Montagekosten sowie eine kompakte Gesamtanordnung der Antriebsmaschine. Aus der Einsparung des Gehäusemantels resultiert als zusätzlicher, wesentlicher Vorteil eine verbesserte und beschleunigte direkte Wärmeabstrahlung von der freien Außenseite des Rotors an die Umgebungsatmosphäre, nachdem der Weg nach außen zum Abführen der im Motor entstehenden Wärme kürzer ist und ein zusätzlicher Wärmeübergang vom Blechpaket des Rotors zum Gehäusemantel entfällt.
Weitere Vorteile bestehen darin, daß der Außendurchmesser des Elektromotors auf einen unter Berücksichtigung der Achshöhe der Fördermaschine möglichen Größtwert ausgelegt werden kann und dadurch die Maschine ein wirtschaftliches Optimum erreicht, und daß der durch die einseitige Rotorbefestigung auf der gegenüberliegenden Seite des Rotors entstehende große freie Querschnitt auf einfache Art eine intensive Kühlung des Elektromotors und dadurch dessen hohe Belastbarkeit bzw. Ausnutzungsgrad ermöglicht.

Obwohl bei geeigneter Bemessung oder Ausgestaltung der Treibscheibe an ihrer Anschlußseite der Rotor unmittelbar daran befestigt werden kann, ist bei einer bevorzugten Ausführungsform der Erfindung der Rotor über ein ringförmiges Anschlußelement oder einzelne eine ringförmige Anordnung bildende Anschlußelemente an der Treibscheibe befestigt. Auf Grund dieses Anschlußelementes ist der Außendurchmesser des Elektromotors vollständig unabhängig von den Durchmessern der Treibscheibe und Bremstrommel wählbar und kann somit bei Bedarf auch größer als jeder dieser Durchmesser sein. Da der Außendurchmesser des Elektromotors mit unterschiedlichen Treibscheibendurchmessern kombiniert werden kann, wird die Kostengünstigkeit der einzelnen Fördermaschine verbessert. Das Anschlußelement oder die Anschlußelemente können axial gerichtete Tragabschnitte aufweisen, an denen das Blechpaket des Rotors, insbesondere durch Schrauben, befestigt ist und zwischen denen im wesentlichen radial nach außen führende Ausnehmungen oder Öffnungen für den Durchtritt von Kühlluft vorgesehen sind.

Ene Intensivierung der Luftführung durch den Motor hindurch und damit der Motorkühlung wird unter Aufrechterhaltung des kompakten Gesamtaufbaus dadurch erreicht, daß das oder die Anschlußelemente über den Umfangsbereich ihrer Tragabschnitte nach Art von Leitflügeln bzw. eines Radiallüfters ausgebildet ist bzw. sind. Zu weiterer Verstärkung der Luftförderung können zwischen den Tragabschnitten zusätzliche Luftleitelemente angeordnet sein.

Obwohl das ringförmige Anschlußelement oder die einzelnen eine ringförmige Anordnung bildenden Anschlußelemente jede beliebige geeignete Querschnittsform aufweisen können, gehen bei einer bevorzugten Ausführungsform die Tragabschnitte und die Luftleitelemente, Leitflügel o.dgl. seitlich bzw. axial von einem an der Treibscheibe befestigten ringförmigen Axialflansch aus. Die das Blechpaket des Rotors zusammenhaltenden Schrauben sind dann direkt in die Tragabschnitte geschraubt.

In Weiterbildung der erfindungsgemäßen Treibscheiben-Fördermaschine kann an der freien Seite des Rotors ein im allgemeinen ringförmiges Abdeckelement angebracht sein, das als Radiallüfter wirkt. Zweckmäßigerweise ist das Abdeckelement im radialen Außenbereich mit durch den Rotor verlaufenden Schrauben an den Tragabschnitten des Anschlußelementes befestigt, weist zwischen schraubentragenden Abschnitten etwa radial gerichtete Ausnehmungen oder Öffnungen und/oder Leitflügel auf und ist auf seiner vom Rotor abgewandten Seite durch eine Leitringscheibe radial einwärts verlängert.

Zur weiteren Intensivierung der Motorkühlung kann der auf der stationären Achse befestigte Stator große achsparallele Kühlkanäle für den Motor in Axialrichtung durchströmende Kühlluft enthalten, die durch die Radiallüfterwirkung der am Umfang des Anschlußelementes vorgesehenen Luftleitelemente von der freien Seite des Elektromotors her angesaugt und an der der Treibscheibe benachbarten Seite von Stator und Rotor nach außen transportiert wird.

Zusätzlich können an der freien Seite des Stators ein oder mehrere umfangsmäßig verteilte Fremdlüfter oder die Ausgänge von durch ein Fremdgebläse beaufschlagten Luftkanälen angeordnet sein.

Insgesamt ermöglicht die erfindungsgemäße Fördermaschine hohe Flexibilität für die Anwendung verschiedener nutzbarer oder bevorzugter Durchmesser ihrer einzelnen Komponenten, insbesondere mit geringen axialen Abmessungen, so daß ein kostengünstiger Aufbau entsteht, der einen wirtschaftlichen Einsatz auch bei kleinen oder mittleren Aufzügen ermöglicht. Die Aufgabe der Erfindung wird ferner gelöst durch eine getriebelose Treibscheiben-Fördermaschine mit den Merkmalen des Patentanspruchs 4. Mit dieser Treibscheiben-Fördermaschine ist eine besonders intensive Kühlung des Außenläufermotors mittels hindurchgeführter Kühlluft möglich.

Ein Ausführungsbeispiel der Aufzugmaschine nach der Erfindung ist nachfolgend anhand von Zeichnungen näher erläutert, in denen
- Fig. 1: ein senkrechter Axialschnitt durch eine Treibscheiben-Fördermaschine gemäß der Erfindung und
- Fig. 2: eine teilweise geschnittene Seitenansicht der Maschine nach Fig. 1 mit Blickrichtung von links ist.

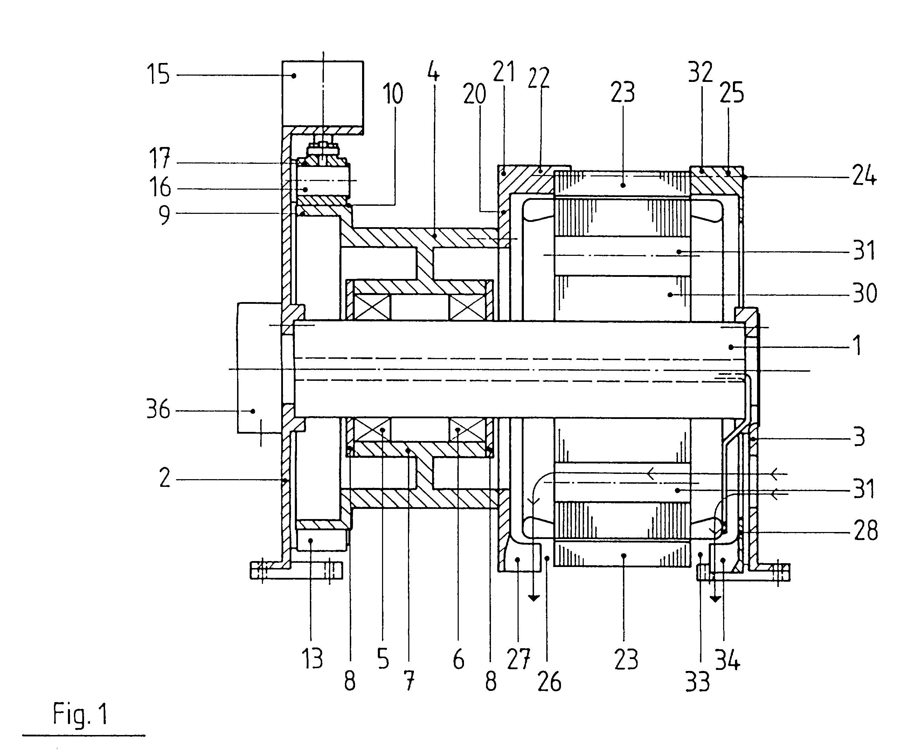

Eine mit einer axialen Durchgangsbohrung versehene stationäre Achse 1 ist mit ihren Enden in zwei außenliegenden Ständern 2, 3 befestigt und über diese am Boden abgestützt. Auf der Achse 1 ist eine Treibscheibe 4 mit Hilfe von Wälzlagern 5, 6 drehbar gelagert, die innerhalb der Treibscheibennabe 7 durch an deren beiden Seiten befestigte Ringscheiben 8 nach außen abgedichtet sind. Der mit Seilrillen versehene Umfangsabschnitt der Treibscheibe 4 geht an seiner in Fig. 1 gezeigten linken Seite in eine Bremstrommel 9 über, die im gezeigten Beispiel einen größeren Durchmesser als die Treibscheibe sowie eine äußere Bremsfläche 10 aufweist.

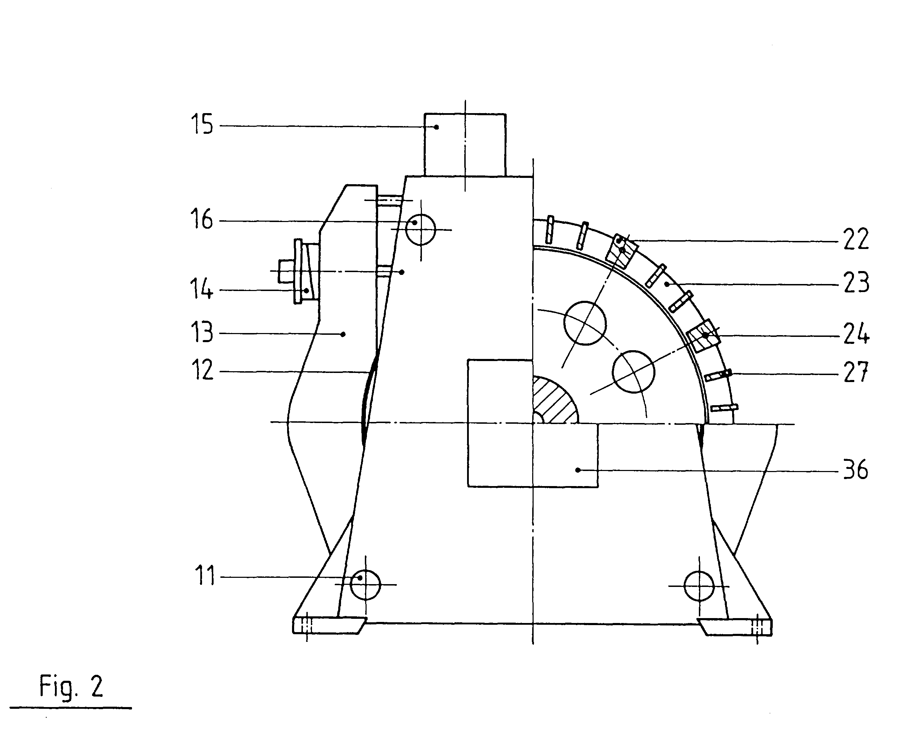

An dem der Bremstrommel 9 benachbarten Ständer 2 sind entsprechend Fig. 2 auf unteren Schwenkachsen 11 mit Bremsbelägen 12 versehene Bremsbacken 13 gelagert, die auf übliche Weise durch Bremsfedern 14 zur Anlage an der Bremsfläche 10 vorgespannt sind. Auf der Oberseite des Ständers 2 angeordnete Magnete 15 stehen mit auf oberen Schwenkachsen 16 gelagerten Schwenkhebeln 17 in Verbindung, um bei Betätigung die Bremsbacken 13 entgegen der Kraft der Federn 14 von der Bremstrommel 9 wegzudrücken und in ihrer gelüfteten Stellung festzuhalten. - Anstelle einer Backenbremse kann auch eine Scheibenbremse vorgesehen sein, wobei dann die Treibscheibe 4 an der in Fig. 1 linken Seite in eine Bremsscheibe mit z.B. radialer Bremsfläche übergeht.

An der in Fig. 1 rechten Seite der Treibscheibe 4 ist ein Radialflansch 20 eines im allgemeinen ringförmigen Anschlußelementes 21 befestigt, von dessen äußerem Ende sich in Axialrichtung erstreckende Tragabschnitte 22 ausgehen. An den Tragabschnitten 22 ist das nach außen vollständig freibleibende Blechpaket eines zu einem Elektromotor gehörenden Rotors 23 beispielsweise mit Hilfe von Schrauben 24 freitragend befestigt. Die Schrauben 24 können von einem das rechte, äußere Ende des Rotors 23 seitlich umfassenden im allgemeinen ringförmigen Abdeckelement 25 ausgehen, wobei sie mit ihrem Gewindeende in Gewindebohrungen der Tragabschnitte 22 aufgenommen sind.

Das Anschlußelement 21 enthält zwischen den umfangsmäßig unter Abständen zueinander angeordneten Tragabschnitten 22 Aussparungen/Öffnungen 26, die in Fig. 1 an der Unterseite des Motors sichtbar sind und bei ihrer Drehung wie ein Radiallüfter wirken. Die Aussparungen 26 können z.B. etwa radialgerichtete Öffnungen oder, in alternativer Ausgestaltung, durch vom Radialflansch 20 ausgehende, in Axialrichtung vorspringende Luftleitelemente 27 gebildet sein.

Innerhalb vom Rotor 23 ist auf der stationären Achse 1 ein Stator 30 befestigt, der eine Mehrzahl besonders großer, nach beiden Seiten offener Kühlkanäle 31 enthält. Da auf der der Treibscheibe 4 abgewandten Motorseite weder eine Rotorlagerung noch eine Motorabdeckung vorgesehen ist, kann bereits hier die Kühlluft unbehindert die Blechpakete von Rotor 23 und Stator 30 umströmen. Ebenso gelangt Kühlluft von der offenen rechten Motorseite durch die großen Kühlkanäle 31 des Stators zu der der Treibscheibe benachbarten Motorseite, von wo sie durch die wie bei einem Radiallüfter wirksamen Öffnungen 26 bzw. Luftleitelemente 27 des Anschlußelementes 21 bei Drehung des Rotors 23 angesaugt und nach außen abgeführt wird.

Das Heranführen von Kühlluft an die freie rechte Motorseite kann noch verbessert werden, wenn auch das ringähnliche Abdeckelement 25 zwischen seinen mit dem Rotor 23 durch die Schrauben 24 fest verbundenen Umfangsabschnitten 32 entsprechend Fig. 1, unten, mit nach außen führenden Öffnungen 33 und/oder Leitflügeln 34 versehen ist. Aufgrund dieser Luftleitelemente ist auch das Abdeckelement 25 im äußeren Bereich seines Durchmessers wie ein Radiallüfter ausgeführt. Das Abdeckelement 25 ist in seiner dem Motor abgewandten Seite durch eine radiale freie Ringscheibe 28 etwas nach innen verlängert und verstärkt dadurch die Kühlluftbewegung von innen nach außen.

Bei einer nicht gezeigten Ausführungsform der Fördermaschine können auf der in Fig. 1 rechten freien Seite des Stators 30 an diesem ein oder gegebenenfalls mehrere unter Umfangsabständen zueinander angeordnete, den Kühlluftstrom verstärkende Lüfter, als sogenannte Fremdlüfter angebracht sein. Die Luftauslaßenden dieser Fremdlüfter oder auch solche von einem oder mehreren Luftzuführungskanälen, die von einem getrennt aufgestellten Gebläse beaufschlagt werden können, befinden sich etwa in der Radialebene der vom Abdeckelement 25 radial einwärts ausgehenden kurzen Ringscheibe 28 und mit Abstand vor dem Stator 30 bzw. dessen Kühlkanälen 31.

Da die stationäre Achse 1 als Hohlachse ausgeführt ist, können Kabel zur Stromversorgung des Elektromotors und auch der Fremdlüfter von dem am linken Ständer 2 außen angeordneten Klemmenkasten 36 durch die Achse auf die rechte Maschinenseite zu Stator und Fremdlüfter geführt werden.

Bei einer nicht gezeigten Ausführungsform der Erfindung steht eine intensive Kühlung des Außenläufer-Motors mittels hindurchgeführter Kühlluft im Vordergrund, die, wie in Verbindung mit Fig. 1, 2 beschrieben, durch Ausnehmungen/Öffnungen 26 in den Tragabschnitten und/oder dazwischen angeordneten Leitflügeln eines an der Treibscheibe befestigten ringförmigen Anschlußelements 21 nach Art eines Radiallüfters aus dem Motor bzw. durch diesen hindurch angesaugt wird. Der Rotor des Motors kann einen Rotormantel aufweisen und direkt oder über den Rotormantel mit den Tragabschnitten 22 des Anschlußelements 21 verschraubt sein. Die übrige Konstruktion hinsichtlich der der Treibscheibe abgewandten offenen Motorseite kann derjenigen entsprechen, die auch bei der Maschine gemäß Fig. 1, 2 zur Anwendung kommt.

## Patentansprüche

1. Getriebelose Treibscheiben-Fördermaschine insbesondere zum Antrieb von Aufzügen, mit einer an beiden Enden auf einer Tragkonstruktion oder am Boden drehfest abgestützten Achse (1), auf der ein Stator (30) eines elektrischen Synchron- oder vorzugsweise Asynchronmotors befestigt und daneben eine Treibscheibe (4) drehbar gelagert ist, die einen mit Seilrillen versehenen ersten Bereich und einen zweiten Bereich für den Angriff von Bremsbacken (13) aufweist und mit dem Rotor (23) des Elektromotors in fester Verbindung steht,
**dadurch gekennzeichnet,**
daß das Blechpaket des Rotors (23) an der dem Bremsbereich (9) abgewandten Seite der Treibscheibe (4) axial freitragend befestigt ist und an seinem freien Außenumfang direkten Kontakt zur Umgebungsatmosphäre hat.

2. Treibscheiben-Fördermaschine nach Anspruch 1, dadurch gekennzeichnet, daß der Rotor (23) über ein Durchmesserunterschiede zwischen Treibscheibe (4) und Rotor (23) ausgleichendes ringförmiges Anschlußelement (21) oder einzelne eine ringförmige Anordnung bildende Anschlußelemente (21) an der Treibscheibe (4) befestigt ist.

3. Treibscheiben-Fördermaschine nach Anspruch 2, dadurch gekennzeichnet, daß das Anschlußelement oder die Anschlußelemente (21) axial gerichtete Tragabschnitte (22) aufweisen, an denen das Blechpaket des Rotors (23), insbesondere durch Schrauben (24), befestigt ist und zwischen denen im wesentlichen radial nach außen führende Ausnehmungen oder Öffnungen (26) für den Durchtritt von Kühlluft vorgesehen sind.

4. Getriebelose Treibscheiben-Fördermaschine, insbesondere zum Antrieb von Aufzügen, mit einer an beiden Enden auf einer Tragkonstruktion oder am Boden drehfest abgestützten Achse (1), auf der ein Stator (30) eines elektrischen Synchron- oder vorzugsweise Asynchronmotors befestigt und daneben eine Treibscheibe (4) drehbar gelagert ist, die einen mit Seilrillen versehenen ersten Bereich und einen zweiten Bereich für den Angriff von Bremsbacken (13) aufweist und mit dem Rotor (23) des Elektromotors in fester Verbindung steht,
wobei ein Rotormantel über ein ringförmiges Anschlußelement (21) oder einzelne, eine ringförmige Anordnung bildende Anschlußelemente mit der Treibscheibe (4) verbunden ist, dadurch gekennzeichnet, daß das oder die Anschlußelemente (21) axial gerichtete Tragabschnitte (22) zur Aufnahme von den Rotor (23) oder Rotormantel axial durchquerenden Befestigungsschrauben aufweisen und zwischen den Tragabschnitten (22) im Anschlußelement (21) radial nach außen führende Ausnehmungen oder Öffnungen (26) für den Durchtritt von Kühlluft vorgesehen sind.

5. Treibscheiben-Fördermaschine nach einem der Ansprüche 2 bis 4, dadurch gekennzeichnet, daß das oder die Anschlußelemente (21) über den Umfangsbereich ihrer Tragabschnitte (22) nach Art von Leitflügeln bzw. eines Radiallüfters ausgebildet ist bzw. sind.

6. Treibscheiben-Fördermaschine nach einem der Ansprüche 2 bis 5, dadurch gekenzeichnet, daß zwischen den Tragabschnitten (22) zur Verstärkung der Luftförderung zusätzliche Luftleitelemente (27) angeordnet sind.

7. Treibscheiben-Fördermaschsine nach einem der Ansprüche 3 bis 6, dadurch gekenzeichnet, daß die Tragabschnitte (22) und die Luftleitelemente, Leitflügel odgl. (27) seitlich bzw. axial von einem an der Treibscheibe (4) befestigten ringförmigen Radialflansch (20) ausgehen.

8. Treibscheiben-Fördermaschine nach einem der Ansprüche 1 bis 3, dadurch gekennzeichnet, daß die das Blechpaket des Rotors (23) zusammenhaltenden Schrauben (24) direkt in die Treibscheibe (4) oder in die Tragabschnitte (22) des ringförmigen Anschlußelements (21) geschraubt sind.

9. Treibscheiben-Fördermaschine nach einem der vorhergehenden Ansprüche, dadurch gekennzeichnet, daß an der freien Seite des Rotors (23) ein im allgemeinen ringförmiges Abdeckelement (25) angebracht ist, das als Radiallüfter wirkt.

10. Treibscheiben-Fördermaschine nach Anspruch 9, dadurch gekennzeichnet, daß das Abdeckelement (25) im radialen Außenbereich mit durch den Rotor (23) bzw. Rotormantel verlaufenden Schrauben (24) an den Tragabschnitten (22) des Anschlußelementes (21) befestigt ist, zwischen schraubentragenden Abschnitten (32) etwa radial gerichtete Ausnehmungen oder Öffnungen (33) und/oder Leitflügel (34) aufweist und auf seiner vom Motor abgewandten Seite durch eine Leitringscheibe (28) radial einwärts verlängert ist.

11. Treibscheiben-Fördermaschine nach einem der vorhergehenden Ansprüche, dadurch gekennzeichnet, daß der auf der stationären Achse (1) befestigte Stator (30) große achsparallele Kühlkanäle (31) für den Motor in Axialrichtung durchströmende Kühlluft enthält.

12. Treibscheiben-Fördermaschine nach einem der vorhergehenden Ansprüche, dadurch gekennzeichnet, daß an der freien Seite des Stators (30) ein oder mehrere umfangsmäßig verteilte Fremdlüfter oder die Ausgänge von durch ein Fremdgebläse beaufschlagten Luftkanälen angeordnet sind.

13. Treibscheiben-Fördermaschsine nach einem der vorhergehenden Ansprüche, dadurch gekennzeichnet, daß die stationäre Achse (1) als Hohlachse ausgebildet ist und daß die Energieversorgung für Motor und Fremdlüfter von einem an einem Achsende angeordneten Klemmenkasten (36) durch die Achse zu deren anderem Ende geführt ist.

## Claims

1. Gearless traction-type hoisting device in particular for driving hoists, with a spindle (1) non-rotatably supported at both ends on a support construction or on the floor, to which spindle a stator (30) of an electric synchronous or preferably asynchronous motor is attached and beside it a traction-sheave (4) is mounted to rotate, which comprises a first region provided with cable grooves and a second region for the engagement of braking jaws (13) and is securely connected to the rotor (23) of the electric motor, characterised in that the bundle of laminations of the rotor (23) is fastened in an axially self-supporting manner on the side of the traction sheave (4) remote from the braking region (9) and on its free outer periphery has direct contact with the ambient atmosphere.

2. Traction-type hoisting device according to Claim 1, characterised in that the rotor (23) is attached by way of an annular connection member (21) compensating for differences in diameter between the traction sheave (4) and rotor (23) or individual connection members (21) forming an annular arrangement, to the traction sheave (4).

3. Traction-type hoisting device according to Claim 2, characterised in that the connection member or the connection members (21) comprise axially directed support sections (22), to which the bundle of laminations of the rotor (23) is fastened, in particular by screws (24), and between which are provided recesses or openings (26) for the passage of cooling air, which recesses lead essentially radially outwards.

4. Gearless traction-type hoising device, in particular for driving hoists, with a spindle (1) non-rotatably supported at both ends on a support construction or on the floor, on which is fastened a stator (30) of an electrical synchronous or preferably asynchronous motor and beside this a traction sheave (4) is rotatably mounted, which comprises a first region provided with cable grooves and a second region for the engagement of braking jaws (13) and is securely connected to the rotor (23) of the electric motor, in which case a rotor casing is connected by way of an annular connection member (21) or individual connection members forming an annular arrangement, to the traction sheave (4), characterised in that the connection member or connection members (21) comprise axially directed support sections (22) for receiving fastening screws passing axially through the rotor (23) or rotor casing and provided between the support sections (22) in the connection member (21) are recesses or openings (26) for the passage of cooling air, which recesses lead radially outwards.

5. Traction-type hoisting device according to one of Claims 2 to 4, characterised in that the connection member or members (21) is/are constructed over the peripheral region of their support sections (22) in the manner of guide vanes or a radial fan.

6. Traction-type hoisting device according to one of Claims 2 to 5, characterised in that located between the support sections (22) are additional air-guide members (27) for increasing the conveyance of air.

7. Traction-type hoisting device according to one of Claims 3 to 6, characterised in that the support sections (22) and the air-guide members, guide vanes or the like (27) emanate laterally or axially from an annular radial flange (20) attached to the traction sheave (4).

8. Traction-type hoisting device according to one of Claims 1 to 3, characterised in that the screws (24) holding together the bundle of laminations of the rotor (23) are screwed directly into the traction sheave (4) or into the support sections (22) of the annular connection member (21).

9. Traction-type hoisting device according to one of the preceding Claims, characterised in that located on the free side of the rotor (23) is a generally annular covering member (25), which acts as a radial fan.

10. Traction-type hoisting device according to Claim 9, characterised in that the covering member (25) is attached in the radially outer region by screws (24) extending through the rotor (23) or rotor casing, to the support sections (22) of the connection member (21), between screw-supporting sections (32) comprises approximately radially directed recesses or openings (33) and/or guide vanes (34) and on its side remote from the motor is extended radially inwards by a guide-ring disc (28).

11. Traction-type hoisting device according to one of the preceding Claims, characterised in that the stator (30) attached to the stationary spindle (1) contains large axis parallel cooling channels (31) for cooling air flowing in the axial direction through the motor.

12. Traction-type hoisting device according to one of the preceding Claims, characterised in that located on the free side of the stator (30) are one or more peripherally distributed outside fans or the outlets of air channels acted upon by an outside fan.

13. Traction-type hoisting device according to one of the preceding Claims, characterised in that the stationary spindle (1) is constructed as a hollow spindle and that the power supply for the motor and outside fan is guided from a terminal box (36) located at one end of the spindle, through the spindle to its other end.

## Revendications

1. Machine de transport à poulie motrice sans engrenage, en particulier pour l'entraînement d'ascenseurs, comportant un axe 1, fixe en rotation, supporté, aux deux bouts, par une structure de support ou par terre, sur lequel est fixé le stator (30) d'un moteur électrique synchrone ou, de préférence, asynchrone et à côté duquel est installée une poulie motrice (4) rotative qui comporte une première zone pourvue d'une gorge de câble et une seconde zone pour l'action de mâchoires de frein (13), et qui fonctionne en liaison fixe avec le rotor (23) du moteur électrique,
**caractérisée en ce que**
le paquet de tôles du rotor (23) est fixé en porte-à-faux, longitudinalement, sur l'autre côté de la poulie motrice (4) par rapport à la zone de freinage (9) et a sa surface latérale externe en contact direct avec l'atmosphère environnante.

2. Machine de transport à poulie motrice suivant la revendication 1, caractérisée en ce que le rotor (23) est monté sur la poulie motrice (4) par l'intermédiaire d'un élément de liaison (21) annulaire ou d'éléments de liaison (21), formant une structure annulaire, qui compensent la différence de diamètre entre la poulie motrice (4) et le rotor (23).

3. Machine de transport à poulie motrice suivant la revendication 2, caractérisée en ce que l'élément ou les éléments de liaison (21) présentent des segments supports (22), orientés longitudinalement, sur lesquels est fixé le paquet de tôles du rotor (23), en particulier par des vis (24), et entre lesquels sont prévus des creux ou des ouvertures (26) qui sont pratiquement radiaux vers l'extérieur pour le passage d'air de refroidissement.

4. Machine de transport à poulie motrice sans engrenage, en particulier pour le moteur d'ascenseurs, comportant un axe 1 fixe en rotation, supporté aux deux bouts par une structure de support ou par terre, sur lequel est fixé le stator (30) d'un moteur électrique synchrone ou, de préférence, asynchrone et à côté duquel est installée rotative une poulie motrice (4) qui comporte une première zone pourvue d'une gorge de câble et une seconde zone pour l'action de mâchoires de frein (13) et qui fonctionne en liaison fixe avec le rotor (23) d'un moteur électrique, une cage de rotor est reliée à la poulie motrice (4) par un élément de liaison (21) annulaire ou par des éléments de liaison (21) séparés qui forment une structure annulaire, caractérisée en ce que l'élément ou les éléments de liaison (21) comportent des segments supports (22), orientées longitudinalement, pour des vis de fixation traversant longitudinalement le rotor (23) ou la cage du rotor et, entre les segments supports (22), sont prévues, dans l'élément de liaison (21), des creux ou des ouvertures (26) menant radialement à l'extérieur, pour le passage de l'air de refroidissement.

5. Machine de transport à poulie motrice suivant une des revendications 2 à 4, caractérisée en ce que l'élément ou les éléments de liaison (21) sont munis, sur leur surface latérale, de leurs segments de support (22), suivant la technique de pales de guidage ou d'un ventilateur radial.

6. Machine de transport à poulie motrice suivant une des revendications 2 à 5, caractérisée en ce qu'entre les segments de support (22), pour renforcer le mouvement de l'air, sont prévus des éléments (27) conducteurs supplémentaires.

7. Machine de transport à poulie motrice suivant une des revendications 3 à 6, caractérisée en ce que les segments de support (22) et les éléments de guidage d'air, pales de guidage, etc., (27) sortent sur le côté ou dans l'axe d'une flasque radiale annulaire (20) fixée à la poulie motrice (4).

8. Machine de transport à poulie motrice suivant une des revendications 1 à 3, caractérisée en ce que les vis (24) qui maintiennent le paquet de tôles du rotor (23) sont directement vissées dans la poulie motrice (4) ou dans les segments de support (22) de l'élément de liaison annulaire (21).

9. Machine de transport à poulie motrice suivant une des revendications précédentes, caractérisée en ce que, sur le côté libre du rotor (23), est ajouté un élément de recouvrement (25), en général annulaire, qui fonctionne en ventilateur radial.

10. Machine de transport à poulie motrice suivant la revendication 9, caractérisée en ce que l'élément de recouvrement (25) est fixé, dans la zone externe radiale, par des vis (24), qui passent à travers le rotor (23) ou la cage du rotor, aux segments de support (22) de l'élément de liaison (21), comporte, entre des segments (32) supportant des vis, des creux ou des ouvertures (33) et/ou une pale de guidage (34) orientés à peu près radialement, et est prolongé radialement vers l'intérieur, sur son côté opposé au moteur, par un disque conducteur annulaire (28).

11. Machine de transport à poulie motrice suivant une des revendications précédentes, caractérisée en ce que le stator (30) fixé sur l'axe stationnaire (1) contient de grands canaux de refroidissement (31), parallèles à l'axe, pour l'air de refroidissement qui passe dans le moteur dans la direction longitudinale.

12. Machine de transport à poulie motrice suivant une des revendications précédentes, caractérisée en ce que, sur le côté libre du stator (30), sont prévus un ou plusieurs ventilateurs séparés, répartis sur la périphérie, ou les sorties des canaux d'air admis par une buse séparée.

13. Machine de transport à poulie motrice suivant une des revendications précédentes, caractérisée en ce que l'axe stationnaire (1) est prévu comme un axe creux et en ce que l'alimentation en énergie du moteur et du ventilateur est guidée d'une boîte de bornes (36) à un bout d'axe, à travers l'axe, jusqu'à son autre bout.
